Europäisches Patentamt

(19) European Patent Office

Office européen des brevets

(11) Publication number: 0 158 119
A2

(12) **EUROPEAN PATENT APPLICATION**

(21) Application number: 85102533.8

(22) Date of filing: 26.07.82

(51) Int. Cl.⁴: C 01 C 3/14
B 01 J 23/50

(30) Priority: 24.09.81 US 305058
24.09.81 US 305057

(43) Date of publication of application:
16.10.85 Bulletin 85/42

(84) Designated Contracting States:
BE DE FR GB IT NL

(60) Publication number of the earlier application
in accordance with Art. 76 EPC: 0 075 675

(71) Applicant: AMERICAN CYANAMID COMPANY
1937 West Main Street P.O. Box 60
Stamford Connecticut 06904(US)

(72) Inventor: Feit, Yoseph c/o AMERICAN CYANAMID
COMPANY
Patent Department 1937 West Main Sreet P.O. Box 60
Stamford Connecticut 06904-0060(US)

(72) Inventor: Kilanowski, David c/o American Cyanamid
Company
American Cyanamid Co. Patent Dep. P.O. Box 60
Stamford, Conn. 06904-0060(US)

(72) Inventor: Olson, Kenneth Earl
I Highgate Road
Riverside, Conn. 06878(US)

(72) Inventor: Katz, Daniel Stanley
117 Highline Trail
Stamford, Conn. 06902(US)

(74) Representative: Wächtershäuser, Günter, Dr.
Tal 29
D-8000 München 2(DE)

(54) HNCO Manufacture by adiabatic air oxidation of HCN.

(57) A process for the air oxidation of hydrogen cyanide to isocyanic acid in the presence of a solid catalyst utilizing adiabatic conditions and controlling temperatures by the proportion of inert gas. A novel metallic silver catalyst having a palladium coating is used.

EP 0 158 119 A2

0158119

AMERICAN CYANAMID COMPANY
Stamford, Connecticut 06904

---

## HNCO MANUFACTURE BY ADIABATIC AIR OXIDATION OF HCN

This invention relates to the manufacture of isocyanic acid, HNCO, by oxidation of hydrogen cyanide gas with oxygen in contact with a solid catalyst effective to promote the reaction, and in particular provides a process giving substantially complete conversion of hydrogen cyanide with high yields of isocyanic acid.

The oxidation of hydrogen cyanide in gas state using a silver catalyst has long been known. (see U.S. Patent 2,712,493 to Moje). Gold and silver-gold alloy have also been used as catalyst (see U.S. Patent 3,032,582 to Zima). The oxidation, as described in the literature, proceeds at relatively elevated temperatures i.e. 300° - 800°C. The principal reactions are those favoring the production of cyanogen and isocyanic acid. Water is necessarily formed, as are other by-products such as carbon monoxide and carbon dioxide. In addition solids in the form of polymers of isocyanic acid are also formed. When the desired product is isocyanic acid, it is known that at least a stoichiometric proportion of oxygen must be present. (see Zima U.S. Patent 3,032,582).

An important object of the present invention is to provide a process for the manufacture of isocyanic acid which can be carried out at temperatures less than 700°C while maintaining substantially complete conversion of hydrogen cyanide with high selectivity for isocyanic acid. Operation with lower reaction temperature at the catalyst will extend the life of the catalyst.

This and other objects of the invention are obtained basically by oxidation of gaseous hydrogen

0158119

cyanide with oxygen at temperatures on the order of 500° - 700° utilizing a solid heterogeneous contact catalyst effective to promote the oxidation of hydrogen cyanide to isocyanic acid in which the process is carried out adiabatically utilizing a sufficient amount of inert gas in the reactant feed mixture to regulate and maintain a steady reaction temperature without need for external cooling means.

The oxygen supplied in the reaction feed mixture should be equal to or in excess of that required stoichiometrically for the reaction:

$$HCN + 1/2\ O_2 = HCNO$$

Preferably the molar ratio of oxygen to hydrogen cyanide in the reaction feed mixture is between 0.5 and 0.7.

The inert gas utilized to control temperature is preferably nitrogen. Other gases inert under the reaction conditions are also suitable. The total requirements of inert gas for adiabatic operation will vary depending on the reactor construction, the catalyst utilized and the operating temperature desired. Usually, the nitrogen requirement for adiabatic operation of the process, expressed on a molar basis with respect to the hydrogen cyanide, (including any nitrogen supplied with air when the oxygen supply is air) will be about 9 to 16 moles nitrogen per mole of HCN.

Catalyst contact time is usually about 10 to 100 milliseconds. The reaction is carried out normally at or slightly above atmospheric pressure. Pressure, however, is not critical, and lower and higher pressures can be used. It is an advantage of the process that it can be operated without high pressures which would increase the danger of hydrogen cyanide leakage from the equipment.

Metal catalysts, particularly silver or gold or mixtures of both are preferred. The metal catalyst can be in the form of wire, such as gauze or chopped wire, granules or silver crystals. Silver crystals are the most preferred catalyst. A particularly desirable catalyst is silver crystals doped with palladium. The effective proportion of palladium to silver in the catalyst composition may be from a few parts per million to several thousand parts per million, preferably between 20 parts per million and 10,000 parts per million. Preferably the silver catalyst is in the form of silver crystals. The palladium may be applied to the silver catalyst surface as a coating by electroless methods or may be applied by other suitable methods. The doped catalyst permits operation at substantially lower temperatures than can be obtained using silver crystals alone.

As used herein the word adiabatic defines an operation in which heat is neither added to nor extracted from the reaction mixture by external means. The heat of reaction is essentially all removed by the gas stream traversing the reactor. Adiabatic operation of the HCN oxidation is particularly advantageous since glass or ceramic reactors are preferred, and it would be difficult to remove heat through glass or ceramic walls. Steel reactors, for example, are generally undesirable since the steel may have an unwanted catalytic effect on the reaction, tending to produce excess by-products, particularly carbon monoxide and carbon dioxide. It is contemplated within the scope of the invention, however, that the walls of the reactor may have to be cooled only to the extent necessary to prevent damage when steel reactors are employed. Only a small proportion (e.g. 10%) of the heat of reaction would be removed by such cooling.

An important aspect of this invention is control of the reaction temperature essentially by adjusting the concentration of inert gas in the reactant feed mixture. It is contemplated that operation of the reaction will be carried out continuously under adiabatic conditions over extended periods of time. It is necessary during a short period at start-up to add heat in order to

- 4 -

ignite the reaction which then continues adiabatically.
Any suitable method of preheating the catalyst bed to
near the ignition temperature can be used.  It is important, however, to avoid temperature excursions near the
960°C melting point of silver  To avoid this, the concentration of either one or both of the reactants, hydrogen cyanide and oxygen, may gradually be increased to
the design concentration in order to control the catalyst
bed temperature within prescribed limits during start-up.
After the reaction becomes spontaneous and the desired
reactant ratio for continuous operation is reached, the
reaction temperature at the catalyst reaction zone is
controlled during the continuous operation essentially by
adjusting the amount of inert gas in the feed mixture.

EXAMPLES

In each of the following tabulated examples a
catalyst in the amount of 50 grams was charged to a glass-
lined reactor forming a 40 millimeter diameter by 13
millimeter high bed supported on quartz chips.  A gaseous
mixture of hydrogen cyanide, air and nitrogen was fed to
the bed in each example at a flow rate, an oxygen to
hydrogen cyanide molar ratio and a nitrogen to hydrogen
cyanide molar ratio as indicated in Tables I, II and III
for the respective runs.  The Tables also show the conditions and results for each run in terms of reaction
temperature, conversion based on hydrogen cyanide feed
and the HNCO yield.  The hydrogen cyanide in the feed
contained 0.02% sulfur dioxide, as a vapor phase polymerization inhibitor.

The reactor start-up procedure was as follows:
Initially the reactor and a preheat zone through which
feed stream was passed were heated electrically to 450° -
600°C with nitrogen flow at about the design rate and
air at about 40% of the design rate.  Hydrogen cyanide
flow was then started at the design rate and the electrical
heaters were turned off.  The catalyst bed temperature
continued to rise 100 to 150°C as a result of the reaction exotherm. This was followed by a temperature decrease, the temperature dropped in the reactor preheat zone. At that point the air flow rate was increased in increments to the design rate to keep the reaction zone temperature near the target level. At the steady state (with no preheating of the mixed gas feed), final adjustment of the reaction temperature was made by adjusting the flow rate of the nitrogen diluent.

The data in the Tables were obtained at steady state adiabatic operation after the above described start-up procedure.

Table I describes a series of Examples I - XVII utilizing a silver catalyst charge which was prepared by conventional electrolysis of an aqueous solution of a suitable silver salt.

A silver catalyst suitable for catalyzing the oxidation of hydrogen cyanide in the gaseous state at elevated temperatures can be prepared by conventional electrolysis of an aqueous solution of a suitable silver salt. While silver purity on the order of 99.9% is obtained by such a technique, such a high degree of purity is probably not necessary. The silver so prepared is recovered as silver metal crystals in needle form with varying particle size. The electrolysis can be controlled to a certain extent to favor a particular particle size distribution. For the purpose of the oxidation of HCN we prefer to use crystals in the size range from about 0.1 to about 5 mm.

For the purpose of comparing results, it is desirable to screen the silver particles in order to provide a fairly uniform particle size so that results from one test to another are comparable. In the following examples all of the catalyst was in the form of electrolytic silver crystals of 99.9% purity having a particle size of 8 x 30 mesh, a proprietary designation indicating particles 0.6 to 2.0 mm thick.

Table II describes a series of Examples XVIII - XXIII utilizing 8 x 30 mesh silver crystals, as a catalyst, which had been coated with palladium to a bulk concentration of 200 ppm.

A quantity of 8 x 30 mesh silver particles were plated with palladium by the electroless deposition technique described in U.S. Patent 2,915,406 to provide a bulk proportion of palladium to silver of 200 ppm. This technique involves the preparation of a 4.9 g/l palladium solution by dissolving 2.08 grams of $PdCl_2$ in 5.5 ml acetone, 230 ml $NH_4OH$(30%) and 20 ml deionized water. The solution is then filtered. Sixty grams of silver crystals, washed in acetone, then 1:1HCl solution and then water, were placed in the palladium solution in a round bottom flask on a rotating device, and 0.3 ml of a 1 molar hydrazine solution in water was added over a one hour period using a syringe pump. The solution was then decanted, and the silver crystals were dried.

The palladium plated silver particles were analyzed by a scanning Auger microprobe and the following properties were determined:

1. The components of the catalyst surface were silver, palladium, chlorine and carbon.

2. Greater than 70% of the catalyst surface was covered with palladium to a thickness of at least 20-50 nanometers, indicating a good clean plating process. In this thickness range palladium constituted at least 10 atom percent of the surface.

3. Observation of palladium and silver at a given spot (2,000 nm diameter) suggested that the palladium had diffused into the silver forming an alloy or that the palladium layer was not contiguous, i.e., contained holes.

4. Chlorine was found to be associated both with the palladium and silver in roughly equal atomic proportions.

5. Small regions of the surface were extremely rich in palladium and chlorine.

6. Carbon was present as a thin layer (about 5 nm on the surface). In addition, isolated spots were very rich in carbon.

7. The 200 ppm bulk palladium content as determined by plasma spectroscopy was distributed at the crystal surface and fell off rapidly to less than 1 to 5% at a depth of 500-1000Å, consistent with a 25% palladium skin 500Å thick over pure silver.

Table III describes a series of Examples XXIV - XXVIII utilizing 8 x 30 mesh silver crystals, as a catalyst, which had been coated with palladium to a bulk concentration of 2000 ppm.

A second catalyst was prepared using 8 x 30 mesh silver particles containing 2000 ppm palladium by bulk analysis. The coating was prepared using a solution of palladium nitrate acidified with nitric acid. The silver crystals were slurried in the acidified solution, decanted and dried.

It will be apparent on comparison of Tables II and III that the increase in proportion of palladium resulted in a significant decrease of cyanogen yield.

. . In each Table the Examples have been arranged in order of ascending reaction temperature. Temperatures were measured by a thermocouple attached to the reactor wall adjacent to the catalyst bed.

In all of the Examples the reaction pressure was about 16 psia and the catalyst contact times were between 19 and 36 milliseconds.

Examples I - IV represented the lowest temperatures which could be maintained with the particular reaction and catalyst. As can be seen by reference to Tables II and III, substantially lower temperatures could be maintained with the palladium on silver catalyst.

## TABLE I

### 8 x 30 MESH Ag CRYSTALS

| Example No. | I | II | III | IV | V | VI | VII | VIII |
|---|---|---|---|---|---|---|---|---|
| Temp., $^{\circ}$C. | 632 | 635 | 635 | 637 | 650 | 652 | 652 | 685 |
| HCN feed, g/hr | 50.0 | 31.6 | 33.8 | 50.0 | 51.7 | 48.3 | 51.7 | 50.7 |
| **Mole Ratios** | | | | | | | | |
| $O_2$/HCN | 0.60 | 0.67 | 0.61 | 0.60 | 0.60 | 0.645 | 0.60 | 0.575 |
| $N_2$/HCN | 11.4 | 12.4 | 11.0 | 11.3 | 11.3 | 12.4 | 11.3 | 10.3 |
| HCN conv., % | 99.5 | 99.5 | 98.9 | 99.3 | 99.9 | 99.7 | 98.9 | 99.7 |
| Normalized [1] Selectivity % | | | | | | | | |
| HNCO | 74 | 65 | 76 | 81 | 72 | 67 | 78 | 73 |
| Solids [2] | 0.68 | 0.73 | 3.2 | 1.4 | 1.5 | 1.1 | 2.0 | 1.0 |
| CO | 2.3 | 5.9 | 3.1 | 0.3 | 3.5 | 5.5 | 2.2 | 3.4 |
| $CO_2$ | 19.6 | 28.1 | 16.5 | 14.3 | 21.0 | 25.2 | 17.8 | 22.0 |
| $(CN)_2$ | 3,8 | 0.78 | 0.74 | 2.6 | 1.8 | 1.0 | NA | 0.24 |

0158119

## TABLE I (Continued)

### 8 x 30 MESH Ag CRYSTALS

| Example No. | IX | X | XI | XII | XIII | XIV | XV | XVI | XVII |
|---|---|---|---|---|---|---|---|---|---|
| Temp., $^{o}$C. | 688 | 688 | 690 | 690 | 696 | 698 | 700 | 702 | 705 |
| HCN feed, g/hr | 62.5 | 75.0 | 51.7 | 51.8 | 50.3 | 63.3 | 51.7 | 62.5 | 51.9 |
| **Mole Ratios** | | | | | | | | | |
| $O_2$/HCN | 0.61 | 0.60 | 0.60 | 0.60 | 0.60 | 0.58 | 0.625 | 0.61 | 0.60 |
| $N_2$/HCN | 9.7 | 9.2 | 10.2 | 10.2 | 10.1 | 9.2 | 10.9 | 9.50 | 10.2 |
| HCN conv., % | 99.2 | 97.2 | 99.6 | 99.6 | 99.4 | 98.8 | 99.6 | 99.0 | 98.9 |
| **Normalized [1] Selectivity %** | | | | | | | | | |
| HNCO | 81 | 76 | 73 | 75 | 71 | 80 | 71 | 78 | 73 |
| Solids [2] | 2.4 | 5.1 | 4.8 | 1.0 | 3.5 | 3.1 | 1.1 | 1.4 | 5.7 |
| CO | 4.1 | 5.0 | 4.3 | 4.3 | 5.0 | 5.7 | 6.3 | 7.1 | 4.5 |
| $CO_2$ | 11.4 | 9.4 | 17.6 | 19.4 | 19.6 | 10.4 | 21.4 | 12.2 | 13.5 |
| $(CN)_2$ | 1.3 | 4.3 | 0.21 | 0.20 | 0.44 | 1.3 | 0.25 | 0.84 | 0.11 |

[1] Normalized selectivity to component i, % $= \dfrac{\text{moles carbon in product } i}{\sum\limits_{j} \text{moles carbon in product } j} \times 100$

[2] Solids consist of cyanuric acid, cyamelide, urea, etc.

0158119

## TABLE II

| Example No. | XVIII | Ag CRYSTALS + 200 PPM Pd | | | | |
|---|---|---|---|---|---|---|
| | | XIX | XX | XXI | XXII | XXIII |
| Temp. °C | 592 | 595 | 595 | 618 | 620 | 625 |
| HCN feed, g/hr | 37 | 50 | 50 | 66 | 50 | 50 |
| Mole Ratios | | | | | | |
| $O_2$/NCH | 0.58 | 0.60 | 0.60 | 0.58 | 0.60 | 0.60 |
| $N_2$/HCN | 11.7 | 11.7 | 11.7 | 10.4 | 11.9 | 11.6 |
| HCN conv., % | 99.6 | 99.3 | 100 | 99.9 | 99.7 | 99.8 |
| Normalized Selectivity | | | | | | |
| HNCO | 80 | 85 | 84 | 80 | 78 | 76 |
| Solids | 1.7 | 1.3 | 2.2 | 4.5 | 2.2 | 1.3 |
| CO | 2.0 | 1.1 | 1.2 | 2.4 | 2.8 | 2.1 |
| $CO_2$ | 15.4 | 10.6 | 9.5 | 9.6 | 15.9 | 19.9 |
| $(CN)_2$ | 1.3 | 1.7 | 3.3 | 3.9 | 0.78 | 0.44 |

## TABLE III

### Ag CRYSTALS + 2,000 PPM Pd

| Example No. | XXIV | XXV | XXVI | XXVII |
|---|---|---|---|---|
| Temp. $^{o}$C. | 585 | 625 | 625 | 632 |
| HCN feed, g/hr | 50.2 | 50.2 | 64.8 | 48.6 |
| **Mole Ratios** | | | | |
| $O_2$/HCN | 0.60 | 0.60 | 0.60 | 0.62 |
| $N_2$/HCN | 10.8 | 11.0 | 11.0 | 11.6 |
| HCN conv. % | 99.4 | 99.5 | 99.2 | 99.7 |
| **Normalized Selectivity** | | | | |
| HNCO | 78 | 80 | 79 | 75 |
| Solids | 4.2 | 2.2 | 2.0 | 3.2 |
| CO | 2.7 | 2.9 | 2.8 | 2.9 |
| $CO_2$ | 15.3 | 14.7 | 15.3 | 18.3 |
| $(CN)_2$ | 0.32 | 0.25 | 0.35 | 0.53 |

0158119

CLAIMS:

1. A process for oxidation of hydrogen cyanide to isocyanic acid which comprises passing a gas feed stream of hydrogen cyanide, oxygen and inert gas under adiabatic conditions in contact with a solid catalyst effective to promote the reaction of hydrogen cyanide and oxygen to form isocyanic acid, the proportion of oxygen being at least one-half mole per mole of hydrogen cyanide, the reaction temperature at the catalyst being about 500 - 700°C, and said temperature being controlled by the proportion of inert gas in said gas feed stream.

2. The process according to Claim 1 in which the proportion of oxygen is between 0.5 to 0.7 moles per mole of hydrogen cyanide.

3. The process according to Claim 1 in which the inert gas is nitrogen.

4. The process according to Claim 3 in which the proportion of nitrogen is between 9 to 16 moles per mole of hydrogen cyanide.

- 5. The process according to Claim 1 in which the catalyst is silver.

6. The process according to Claim 5 in which the silver catalyst is in the form of crystals.

7. The process according to Claim 1 in which the contact time with the catalyst is on the order of 10 to 100 milliseconds.

8. The process according to Claim 1 in which the inert gas is nitrogen, the proportion of oxygen is from 0.5 to 0.7 moles per mole of hydrogen cyanide, the proportion of nitrogen is between 9 to 16 moles per mole of hydrogen cyanide, the catalyst is in the form of silver crystals, and the catalyst contact time is on the order of 10 to 100 milliseconds.